# EUROPEAN PATENT SPECIFICATION

(11) **EP 2 995 512 B1**
(45) Date of publication and mention of the grant of the patent: **15.11.2017**
(21) Application number: 14003138.6
(22) Date of filing: 11.09.2014
(51) Int. Cl.: B60R 21/217, B60R 21/26

(54) **Airbag module, retainer and assembly of airbag module and steering wheel**
Airbagmodul, Halter und Anordnung eines Airbagmoduls und Lenkrad
Module d'airbag, dispositif de retenue et ensemble de module d'airbag et volant de direction

(43) Date of publication of application: 16.03.2016
(73) Proprietor: Dalphi Metal España, S.A., 36213 Vigo (ES)
(72) Inventor: Celada Yebenes, Manuel Angel, 36391 Priegue (ES)
(74) Representative: ZF TRW Patentabteilung

(56) References cited:
- EP-A2- 1 136 328
- DE-A1-102010 008 513
- US-A- 5 547 213
- US-A1- 2002 125 704
- US-A1- 2003 146 604
- US-A1- 2004 061 314

## Description

The present invention relates to an airbag module for a steering wheel according to the preamble of Claim 1. The present invention further relates to a retainer of such an airbag module, as well as an assembly of such an airbag module and a steering wheel.

From the state of the art an airbag module of this type is known, which is adapted for integration into a steering wheel as a so-called driver airbag. This known airbag module comprises a gas generator which is retained together with a folded air bag at an associated gas generator support by means of a retainer having a recess which is formed as a central opening. The gas generator is at least partially received in this central opening and has a flange-type extension which is arranged between the retainer and the gas generator support. The retainer housing the gas generator in its central opening, the folded air bag and the gas generator support are rigidly attached to each other by associated retainer studs. These retainer studs are attached to, or integral with, the retainer and firstly passed through suitable openings provided in the folded air bag and subsequently also through suitable openings provided in the gas generator support, where they are attached, e.g. by associated retainer nuts.

However, while introducing the retainer studs into the suitable openings provided in the folded air bag, the gas generator may slip out of the central opening of the retainer. This may complicate and unnecessarily lengthen assembling of the airbag module. US 5547213 A shows a generic airbag module for a steering according to the preamble of claim 1, including an airbag, an inflator and an inflator mount providing an inflator flange grip. The inflator flange grip secures the inflator to the inflator mount by a friction-fit connection or a snap-fit connection. Furthermore, the airbag module includes an airbag retainer that connects the airbag to the inflator mount and a module housing of the airbag module.

Further, an assembly of a gas generator and a generator holder is disclosed in US 2004/0061314 A1, wherein the gas generator is axially inserted into a circular cylindrical wall of the generator holder. After insertion of the gas generator, clamping extensions of the cylindrical wall are plastically deformed in a radial direction in order to secure the gas generator to the generator holder.

It is an object of the present invention to provide a new airbag module with a retainer that allows for a simplified and accelerated assembling, as well as a new retainer and a new assembly of such an airbag module and a steering wheel.

This object is achieved by an airbag module for a steering wheel, including the features of Claim 1.

By providing the retainer of the airbag module with the at least one retaining element, the gas generator can easily be retained in the retainer during assembling of the airbag module, so that slipping of the gas generator out of the retainer can be avoided reliably. Thus, an increase of manufacturing effort and time due to the gas generator slipping out of the retainer during assembling of the airbag module can be avoided.

According to a preferred embodiment of the invention, said at least one retaining element comprises at least one flexible tongue that releasably engages said gas generator in said recess.

The at least one retaining element can, thus, be realized by a simple and robust component which allows for a tool-free mounting of the gas generator to the retainer.

According to a further preferred embodiment, said recess is defined by a collar, said at least one retaining element being integral with said collar.

Thus, a stable and rigid retainer can be provided.

According to a further preferred embodiment, said at least one retaining element is provided as an axial extension of said collar.

Thereby, the at least one retaining element can be embodied in a previously unused and, thus, freely available space of the airbag module.

According to a further preferred embodiment, said at least one retaining element represents a cut out-portion of said collar.

Thus, the at least one retaining element can be manufactured easily without requiring additional material and components, i.e. departing from the already available collar. Accordingly, a resource-saving and, therefore, cost-efficient implementation of the retainer can be realized.

According to a further preferred embodiment, said recess is embodied as an opening provided in said associated retainer.

This allows for an easy and rapid positioning of the gas generator relative to the retainer during assembling of the airbag module.

According to the invention, said at least one retaining element radially spring-loads said gas generator with respect to said recess, which is preferably embodied as an opening.

Thus, the gas generator can be retained safely and permanently in said opening, while being mounted thereto in an uncomplicated and effort-saving manner.

According to a further preferred embodiment, at least three retaining elements are provided, said at least three retaining elements centering said gas generator within said recess.

This allows for an exact positioning and centering of the gas generator in the recess of the retainer.

According to the invention, said gas generator comprises a flange-type extension that is retained between said associated retainer and said gas generator support.

Thus, the gas generator can be fixed between the retainer and the gas generator support in a robust and stable manner.

The above mentioned object is also achieved by a retainer of the airbag module described above, including the features of Claim 8.

This allows for provision of a simple and robust retainer which enables a tool-free mounting and fixing of the gas generator to the retainer.

The above mentioned object is further achieved by an assembly including the airbag module mentioned above and a steering wheel.

By providing the retainer of the airbag module with the at least one retaining element, the gas generator can easily and securely be retained in the retainer during assembling of the airbag module, so that slipping of the gas generator out of the retainer can be avoided reliably. Thus, an increase of manufacturing effort and time due to the gas generator slipping out of the retainer during assembling of the airbag module can be avoided.

Further details and advantageous developments of the present invention are resulting from the embodiments described hereinafter and illustrated in the accompanying drawings, which are only shown byway of example and by no means meant to restrict the present invention thereto:
Fig. 1 shows a partial sectional view of an airbag module according to the present invention, with a gas generator and a retainer which is embodied according to a preferred embodiment,
Fig. 2 shows a perspective view of an assembly of the retainer and the gas generator of Fig. 1, and
Fig. 3 shows an enlarged view of a detail of the assembly of Fig. 2.

In the following description the terms left, right, front, rear, top and bottom relate to the respective drawing figure and may vary in dependence on a respectively selected alignment (portrait or landscape) from one drawing figure to another. Equal or equally acting parts are denoted with the same reference numbers in different figures and are usually described only once.

**Fig**. **1** shows an airbag module 100 for an associated steering wheel according to the present invention, which is implemented as a so-called driver airbag. The airbag module 100 comprises a folded air bag 180 which is inflatable by an associated gas generator 120. A gas distribution member or diffusor may optionally be arranged in an area between the gas generator 120 and the folded air bag 180.

The gas generator 120 can be realized e.g. by a gas generator known from the state of the art, which is also referred to as an inflator in the state of the art. Illustratively, the gas generator 120 comprises an inversed cup-shaped casing 122 having a bottom 123 which is transferred, via an outer circumference 124, into a flange-type extension 125, hereinafter also referred to as flange 125.

The gas generator 120 is supported by an associated gas generator support 110. More specifically, the gas generator 120, and preferably the flange 125, is retained at the gas generator support 110 by means of a retainer 130 such that at least the flange 125 is clamped between the retainer 130 and the gas generator support 110. Furthermore, the folded air bag 180 is also at least partially clamped between the retainer 130 and the gas generator support 110.

The gas generator support 110 is preferably provided as a rigid plastic or metal plate that is fastened to an associated steering wheel via suitable fastening means, such as a mounting bracket 200. However, it should be noted that a corresponding steering wheel is well-known to the skilled person and not part of the present invention, so that illustration of such a steering wheel as well as a more detailed illustration of the mounting bracket 200 have been omitted for simplicity and clarity of the drawings.

By way of example, the mounting bracket 200 is attached to the gas generator support 110 and, thus, indirectly to the folded air bag 180 and the retainer 130 by a plurality of suitable retainer studs 140. Illustratively, only two such retainer studs 142, 144 are shown. These two retainer studs 142, 144 are e.g. provided with external threads and secured to the mounting bracket 200 by means of associated retainer nuts 143, 145.

The retainer studs 142, 144 are preferably durably attached to the retainer 130, e.g. via a press-fit connection. Alternatively, the retainer studs 142, 144 can be embodied integral to the retainer 130.

The retainer 130 illustratively comprises an inversed U-shaped outer rim 132 for purposes of stability, and at least one recess 136, which is preferably embodied as an opening that is suitable to receive the gas generator 120 and, in particular, its inversed cup-shaped casing 122. The opening 136 is defined by an inner circular collar 134 of the retainer 130.

By way of example, the collar 134 axially extends in a tube-like manner from the retainer 130 in a direction opposite to the gas generator support 110 and is suitable to encompass at least partly the outer circumference 124 of the gas generator 120. Illustratively, the gas generator 120 is arranged in the opening 136 of the retainer 130 such that the collar 134 encompasses the outer circumference 124 of the gas generator 120 in a region adjacent to the flange 125.

According to an embodiment, the retainer 130 comprises at least one retaining element 150 that releasably retains the gas generator 120 in the opening 136. The at least one retaining element 150 preferably comprises at least one flexible tongue 152 that is deflected radially inwards and, accordingly, releasably engages the gas generator 120 in the opening 136. In other words, the at least one retaining element 150 preferentially radially spring-loads the gas generator 120 with respect to said opening 136, i.e. spring-loads the gas generator 120 in a direction that is oriented radially inwards.

Preferably, the at least one retaining element 150 is integral with the collar 134 and provided as an axial extension thereof. However, it should be noted that the present invention is not limited to retaining elements that are provided as axial extensions of the collar 134. Instead, other embodiments are also realizable and, therefore, also contemplated. For instance, the at least one retaining element 150 may alternatively or additionally be embodied as a cut out-portion of the collar 134.

It should further be noted that the at least one retaining element 150 can be adapted to fulfill additional functions. For instance, the at least one retaining element 150 can be configured as ground connection for the casing 122 of the gas generator 120 or as 12V DC connection thereof.

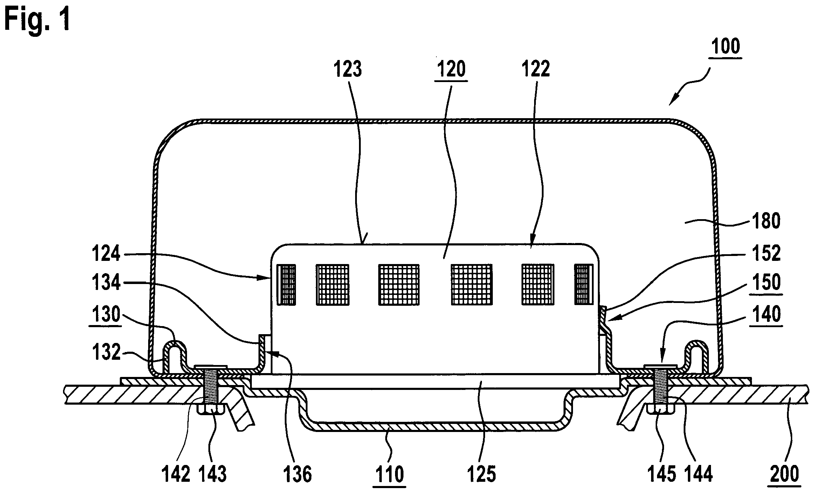

**Fig**. **2** shows the gas generator 120 and the retainer 130 of Fig. 1 for further illustration of the plurality of suitable retainer studs 140, which are illustratively connected to the retainer 130 by means of a press-fit connection. The plurality of suitable retainer studs 140 comprises the two retainer studs 142, 144 of Fig. 1, as well as two additional retainer studs 146, 148.

By way of example, the retainer 130 also comprises a horizontally arranged flexible tongue 139 that is positioned in a region between the outer rim 132 and the collar 134 of the retainer 130. This horizontally arranged flexible tongue 139 can be used as positioning means that are suitable to enable in interaction with the gas generator 120 adjustment of a required rotational orientation of the gas generator 120. Alternatively, or additionally, they can be used as cable guide.

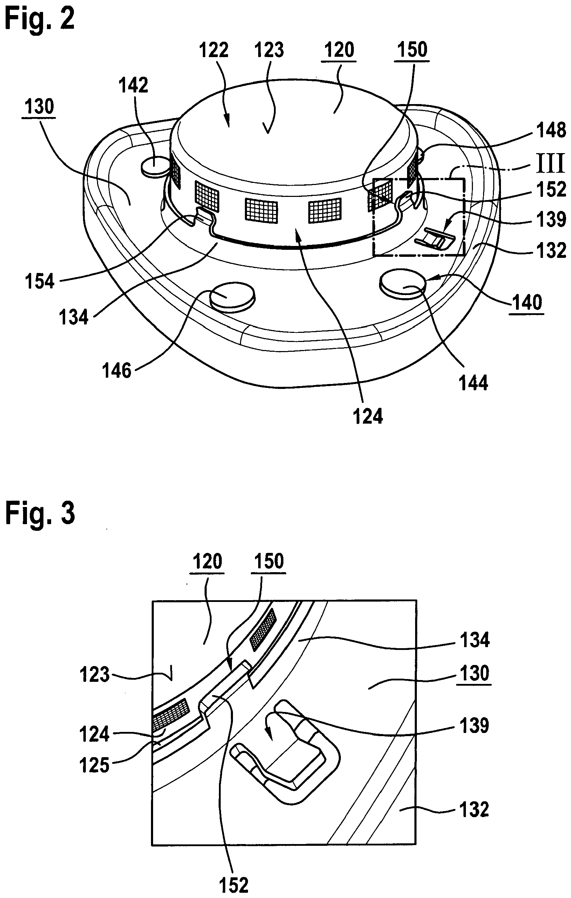

Fig. 2 further illustrates the releasable fixation of the inversed cup-shaped casing 122 of the gas generator 120 in the opening 136 of the retainer 130, which is defined by the collar 134, by means of the at least one retaining element 150. This at least one retaining element 150 illustratively comprises the at least one flexible tongue 152 of Fig. 1, as well as at least one other flexible tongue 154.

According to an embodiment, at least three retaining elements 150, i.e. at least three flexible tongues 152, 154, are provided on the collar 134 for spring-loading the gas generator 120 radially inwards and for centering the gas generator 120 within the opening 136. These retaining elements 150 are preferably equidistantly arranged on the collar 134 for accurately centering the gas generator 120 in the opening 136. For instance, if exactly three retaining elements 150 are provided, they are preferably separated from each other by an angle of approximately 120°. If exactly four retaining elements 150 are provided, as in the illustrated example where two retaining elements are hidden by the gas generator 120, they are preferably separated from each other by an angle of approximately 90°, and so on.

**Fig**. **3** shows an enlarged section of Fig. 2 in top view, in order to further illustrate the radially inwards directed spring-loading of the gas generator 120 by the flexible tongue 152. Fig. 3 also further illustrates the implementation of the flexible tongue 152 as an axial extension of the collar 134 of the retainer 130.

As a matter of course, plural changes and modifications are possible within the scope of the present invention.

## Claims

1. An airbag module (100) for a steering wheel, comprising
a gas generator support (110),
a gas generator (120) that includes a flange-type extension (125) and is retained at said gas generator support (110),
an associated retainer (130) having a recess (136),
an airbag (180) being inflatable by said gas generator (120) and being at least partially clamped between said retainer (130) and said gas generator support (110),
said gas generator (120) being at least partially arranged in said recess (136) of said associated retainer (130),
**characterized in that** said flange-type extension (125) of said gas generator (120) is retained between said associated retainer (130) and said gas generator support (110) such that said gas generator (120) is retained at said gas generator support (110) by means of said associated retainer (130), wherein said retainer (130) comprises at least one retaining element (150) that releasably retains said gas generator (120) in said recess (136) and that radially spring-loads said gas generator (120) with respect to said recess (136).

2. The airbag module according to claim 1, **characterized in that** said at least one retaining element (150) comprises at least one flexible tongue (152, 154) that releasably engages said gas generator (120) in said recess (136).

3. The airbag module according to claim 1 or 2, **characterized in that** said recess (136) is defined by a collar (134), said at least one retaining element (150) being integral with said collar (134).

4. The airbag module according to claim 3, **characterized in that** said at least one retaining element (150) is provided as an axial extension of said collar (134).

5. The airbag module according to claim 3, **characterized in that** said at least one retaining element (150) represents a cut out-portion of said collar (134).

6. The airbag module according to at least one of the preceding claims 1 to 5, **characterized in that** said recess (136) is embodied as an opening (136) provided in said associated retainer (130).

7. The airbag module according to at least one of the preceding claims 1 to 6, **characterized in that** at least three retaining elements (150) are provided, said at least three retaining elements (150) centering said gas generator (120) within said recess (136).

8. A retainer (130) of an airbag module (100) according to at least one of the preceding claims 1 to 7, including
a recess (136) for reception of a gas generator (120) of said airbag module (100) that is suitable to be mounted to a steering wheel,
a clamping portion for abutting against an airbag (180) to clamp said airbag (180) at least partially between said retainer (130) and a gas generator support (110),
**characterized in that** at least one retaining element (150) for abutting against said gas generator (120) is provided to radially spring-load said gas generator (120) with respect to said recess (136), said at least one retaining element (150) being configured to releasably retain said gas generator (120) in said recess (136) when said gas generator (120) is introduced into said recess (136).

9. An assembly comprising an airbag module (100) according to at least one of the preceding claims 1 to 7 and a steering wheel.

## Patentansprüche

1. Airbag-Modul (100) für ein Lenkrad, mit
einer Gasgeneratorhalterung (110),
einem Gasgenerator (120), der eine flanschartige Verlängerung (125) aufweist und an der Gasgeneratorhalterung (110) gehalten wird,
einem zugehörigen Halter (130) mit einer Vertiefung (136),
einem Airbag (180), der durch den Gasgenerator (120) aufblasbar ist und zumindest teilweise zwischen dem Halter (130) und der Gasgeneratorhalterung (110) festgeklemmt ist,
wobei der Gasgenerator (120) zumindest teilweise in der Vertiefung (136) des zugehörigen Halters (130) angeordnet ist,
**dadurch gekennzeichnet, dass** die flanschartige Verlängerung (125) des Gasgenerators (120) zwischen dem zugehörigen Halter (130) und der Gasgeneratorhalterung (110) derart festgehalten wird, dass der Gasgenerator (120) an der Gasgeneratorhalterung (110) mit Hilfe des zugehörigen Halters (130) festgehalten wird, wobei der Halter (130) mindestens ein Rückhalteelement (150) umfasst, das den Gasgenerator (120) lösbar in der Vertiefung (136) festhält und das den Gasgenerator (120) bezüglich der Vertiefung (136) radial federbelastet.

2. Airbag-Modul nach Anspruch 1, **dadurch gekennzeichnet, dass** das mindestens eine Rückhalteelement (150) mindestens eine elastische Zunge (152, 154) umfasst, die den Gasgenerator (120) lösbar in der Vertiefung (136) verrastet.

3. Airbag-Modul nach Anspruch 1 oder 2, **dadurch gekennzeichnet, dass** die Vertiefung (136) durch eine Manschette (134) festgelegt ist, wobei das mindestens eine Rückhalteelement (150) einstückig mit der Manschette (134) ausgebildet ist.

4. Airbag-Modul nach Anspruch 3, **dadurch gekennzeichnet, dass** das mindestens eine Rückhalteelement (150) als eine axiale Erweiterung der Manschette (134) vorgesehen ist.

5. Airbag-Modul nach Anspruch 3, **dadurch gekennzeichnet, dass** das mindestens eine Rückhalteelement (150) einen Ausschnittbereich der Manschette (134) darstellt.

6. Airbag-Modul nach mindestens einem der vorhergehenden Ansprüche 1 bis 5, **dadurch gekennzeichnet, dass** die Vertiefung (136) als eine in dem zugehörigen Halter (130) vorgesehene Öffnung (136) ausgebildet ist.

7. Airbag-Modul nach mindestens einem der vorhergehenden Ansprüche 1 bis 6, **dadurch gekennzeichnet, dass** mindestens drei Rückhalteelemente (150) vorgesehen sind, wobei die mindestens drei Rückhalteelemente (150) den Gasgenerator (120) innerhalb der Vertiefung (136) zentrieren.

8. Halter (130) eines Airbag-Moduls (100) nach mindestens einem der vorhergehenden Ansprüche 1 bis 7, mit
einer Vertiefung (136) zur Aufnahme eines Gasgenerators (120) des Airbag-Moduls (100), das zur Anbringung an einem Lenkrad geeignet ist,
einem Klemmabschnitt zur Anlage an einem Airbag (180), um den Airbag (180) zumindest teilweise zwischen dem Halter (130) und einer Gasgeneratorhalterung (110) einzuklemmen,
**dadurch gekennzeichnet, dass** mindestens ein Rückhalteelement (150) zur Anlage an dem Gasgenerator (120) so vorgesehen ist, dass es den Gasgenerator (120) bezüglich der Vertiefung (136) radial federbelastet, wobei das mindestens eine Rückhalteelement (150) so ausgeführt ist, dass es den Gasgenerator (120) lösbar in der Vertiefung (136) festhält, wenn der Gasgenerator (120) in die Vertiefung (136) eingeführt wird.

9. Anordnung mit einem Airbag-Modul (100) nach mindestens einem der vorhergehenden Ansprüche 1 bis 7 und Lenkrad.

## Revendications

1. Un module airbag (100) pour volant de direction, comprenant
un support de générateur de gaz (110),
un générateur de gaz (120) qui comprend une extension de type flasque (125) et est retenu sur ledit support de générateur de gaz (110),
un élément de retenue associé (130) ayant un évidement (136)
un airbag (180) étant gonflable par le dit générateur de gaz (120) et étant serré au moins partiellement entre le dit dispositif de retenue (130) et le dit support de générateur de gaz (110),
Le dit générateur de gaz (120) étant disposé au moins partiellement dans le dit évidement (136) du dit élément de retenue associé (130),
**caractérisé en ce que** la dite extension de type flasque (125) du dit générateur de gaz (120) est retenue entre le dit élément de retenue associé (130) et le dit support de générateur de gaz (110) au moyen du dit élément de retenue associé (130), pour lequel le dit dispositif de retenue (130) comprend au moins un élément de retenue (150) qui retient de manière libérable le dit générateur de gaz (120) dans le dit évidement (136) et qui charge élastiquement radialement le dit générateur de gaz (120) par rapport au dit évidement (136).

2. Module airbag selon la revendication 1, **caractérisé en ce que** au moins un des dits éléments de retenue (150) comprend au moins une languette flexible (152, 154) qui engage le dit générateur de gaz (120) de manière amovible dans le dit évidement (136).

3. Module airbag selon la revendication 1 ou 2, **caractérisé en ce que** le dit évidement (136) est défini par un collier (134), au moins un des dits éléments de retenue (150) étant solidaire du dit collier (134).

4. Module airbag selon la revendication 3, **caractérisé en ce qu'**au moins un des dits éléments de retenue (150) est prévu sous la forme d'un prolongement axial du dit collier (134).

5. Module airbag selon la revendication 3, **caractérisé en ce qu'**au moins un des dits éléments de retenue (150) représente une partie découpée du dit collier (134).

6. Module airbag selon au moins l'une des revendications 1 à 5, **caractérisé en ce que** le dit évidement (136) est réalisé sous la forme d'une ouverture (136) prévue dans le dit élément de retenue associé (130).

7. Module airbag selon au moins l'une des revendications précédentes 1 à 6, **caractérisé en ce qu'**au moins trois éléments de retenue (150) sont prévus, qu'au moins les dits trois éléments de retenue (150) centrant ledit générateur de gaz (120) sont à l'intérieur du dit évidement (136).

8. Un dispositif de retenue (130) d'un module airbag (100) selon au moins l'une des revendications précédentes 1 à 7, comprenant
un évidement (136) pour recevoir un générateur de gaz (120) du dit module airbag (100) prévu pour être monté sur un volant de direction,
une partie de serrage pour venir en butée contre l'airbag(180) pour serrer le dit airbag (180) au moins partiellement entre le dit dispositif de retenue (130) et un support de générateur de gaz (110)
**Caractérisé en ce qu'**au moins un élément de retenue (150) venant en butée contre le dit générateur de gaz (120) est prévu pour charger élastiquement radialement le dit générateur de gaz (120) par rapport au dit évidement (136), au moins un des dits éléments de retenue (150) étant configuré pour retenir de manière amovible le dit générateur de gaz (120) dans le dit évidement (136) lorsque le dit générateur de gaz (120) est introduit dans le dit évidement (136).

9. Ensemble comprenant un module airbag (100) selon au moins l'une des revendications précédentes 1 à 7 et un volant de direction.
